# EUROPEAN PATENT SPECIFICATION

(11) **EP 4 227 012 B1**
(45) Date of publication and mention of the grant of the patent: **12.02.2025**
(21) Application number: 20962382.6
(22) Date of filing: 17.11.2020
(51) Int. Cl.: B21B 35/12, B21B 35/14

(54) **GEAR SPINDLE DEVICE FOR ROLLING MILL, ROLLING MILL FACILITY, AND METHOD FOR COOLING GEAR SPINDLE DEVICE FOR ROLLING MILL**
GETRIEBESPINDELVORRICHTUNG FÜR EINE WALZWERKSANLAGE, WALZANLAGE UND VERFAHREN ZUR KÜHLUNG DER GETRIEBESPINDELVORRICHTUNG FÜR EIN WALZWERK
DISPOSITIF BROCHE À ENGRENAGE POUR UNE INSTALLATION DE LAMINOIR, INSTALLATION DE LAMINAGE ET PROCÉDÉ DE REFROIDISSEMENT DE DISPOSITIF BROCHE À ENGRENAGE POUR LAMINOIR

(43) Date of publication of application: 16.08.2023
(73) Proprietor: Primetals Technologies Japan, Ltd., Hiroshima-shi, Hiroshima 733-8553 (JP)
(72) Inventor: KONO, Ryota, Hiroshima-shi, Hiroshima 733-8553 (JP); KAWASUMI, Tomomi, Hiroshima-shi, Hiroshima 733-8553 (JP)
(74) Representative: Strehl Schübel-Hopf & Partner
(86) International application number: PCT/JP2020/042838
(87) International publication number: WO 2022/107218

(56) References cited:
- JP-A- 2007 538 204
- JP-A- 2014 532 565
- JP-B2- 5 575 213
- No further relevant documents disclosed

## Description

### TECHNICAL FIELD

The present disclosure relates to a gear spindle device for a rolling mill, a rolling mill facility, and a method of cooling a gear spindle device for a rolling mill.

### BACKGROUND ART

In a rolling mill facility for rolling a steel plate or the like, a spindle is provided between a motor and a mill roll in order to transmit the driving force of the motor to the mill roll. As such a spindle, in some cases, a gear-type spindle using a gear (gear spindle device) is used.

Patent Document 1 discloses a gear spindle including a spindle outer cylinder having an end portion connected to an output shaft or the like of a motor or a gear box and a spindle inner cylinder fitted with the spindle outer cylinder at an end portion opposite to the output shaft described above. At the fitting portion between the spindle outer cylinder and the spindle inner cylinder, an inner gear (inner circumferential gear) is provided for the spindle outer cylinder, and an outer gear (outer circumferential gear) is provided for the spindle inner cylinder so as to engage with the inner gear of the spindle outer cylinder. The torque from the motor is transmitted between the spindle outer cylinder and the spindle inner cylinder via the engaging portion between the inner gear and the outer gear. Furthermore, a lubricant oil chamber sealing a lubricant oil for lubricating the engagement portion between the inner gear and the outer gear described above is formed between the spindle outer cylinder and the spindle inner cylinder at the fitting portion, and the lubricant oil chamber is isolated from the exterior space by a seal member.

### Citation List

### Patent Literature

Patent Document 1: JP5575213B

Further, a gear spindle device from which the precharacterizing part of claim 1 starts out is disclosed in EP 2929948 A1.

### SUMMARY

### Problems to be Solved

Meanwhile, heat is generated from friction or the like at the engaging portion between the inner circumferential gear and the outer circumferential gear of a gear spindle, and thus the gear spindle device may be cooled using a coolant in order to suppress deterioration of the performance of the lubricant oil or wear of the seal member due to the heat, for instance. However, depending on the manner of cooling, the coolant may scatter and cause a negative influence on devices disposed in the vicinity of the gear spindle device or the material to be rolled.

In view of the above, an object of at least one embodiment of the present invention is to provide a gear spindle device or a rolling mill, a rolling mill facility, and a method of cooling a gear spindle device for a rolling mill capable of reducing the negative influence on the devices or the material to be rolled due to supply of the coolant.

### Solution to the Problems

According to at least one embodiment of the present invention, a gear spindle device for a rolling mill is as set forth in the appended claims.

According to at least one embodiment of the present invention, a rolling mill facility is as set forth in the appended claims.

According to at least one embodiment of the present invention, a method for cooling a gear spindle device for a rolling mill is as set forth in the appended claims.

### Advantageous Effects

According to at least one embodiment of the present invention, it is possible to provide a gear spindle device or a rolling mill, a rolling mill facility, and a method of cooling a gear spindle device for a rolling mill capable of reducing negative the influence on the devices and the material to be rolled due to supply of the coolant.

### BRIEF DESCRIPTION OF DRAWINGS

FIG. 1 is a schematic configuration diagram of a rolling mill facility to which a gear spindle device according to some embodiments is applied.
FIG. 2 is a schematic cross-sectional diagram showing an end portion of the gear spindle device 10 at the side of the motor 2 according to an embodiment.
FIG. 3 is a partial cross-sectional diagram of the gear spindle device 10 according to an embodiment.
FIG. 4 is an A-A cross-sectional view of FIG. 3.
FIG. 5 is a B-B cross-sectional view of FIG. 3.
FIG. 6 is a schematic configuration diagram of the rolling mill facility 1 including the gear spindle device 10 according to an embodiment.

### DETAILED DESCRIPTION

Embodiments of the present invention will now be described in detail with reference to the accompanying drawings. It is intended, however, that unless particularly identified, dimensions, materials, shapes, relative positions and the like of components described in the embodiments shall be interpreted as illustrative only and not intended to limit the scope of the present invention.

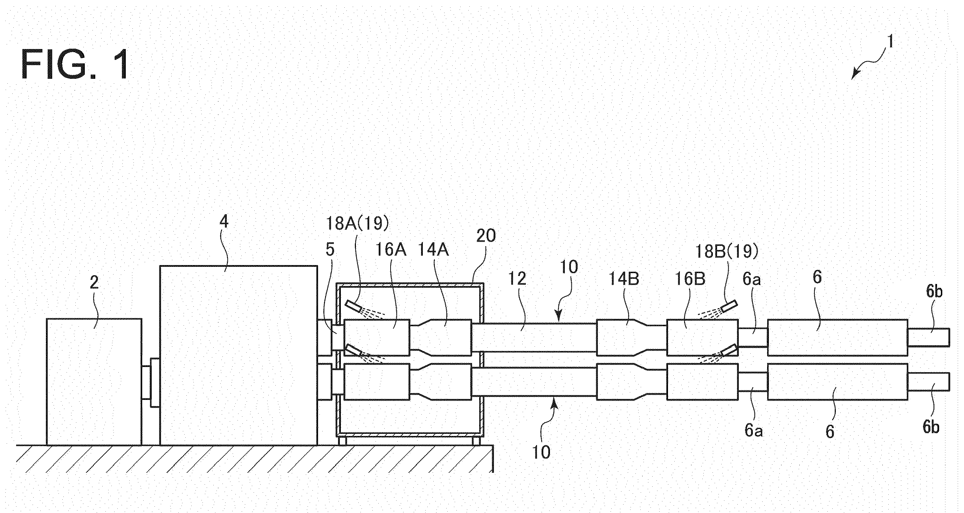

FIG. 1 is a schematic configuration diagram of a rolling mill facility to which a gear spindle device according to some embodiments is applied. The rolling mill facility 1 depicted in the drawing is a facility for rolling a material to be rolled (steel or the like), and includes a pair of mill rolls (work rolls) 6, a motor 2 for generating a driving force for driving the pair of mill rolls 6 to rotate, and a pair of gear spindle devices 10 disposed between the motor 2 and each one of the pair of the mill rolls 6.

The pair of mill rolls 6 are disposed so as to sandwich the material to be rolled, and supported rotatably on a housing (not depicted) via an axle box (not depicted) disposed on axial end portions 6a, 6b of the mill roll 6. Although not depicted, the rolling mill facility 1 may further include a pair of backup rolls disposed so as to sandwich the pair of mill rolls 6. The pair of backup rolls may be rotatably supported on the above described housing via an axle box disposed on the axial end portions of the backup roll.

The pair of gear spindle devices 10 are configured to transmit the rotary driving force generated by the motor 2 to each of the pair of mill rolls 6.

Each of the pair of the gear spindle devices 10 includes a middle shaft 12, a spindle inner cylinder 14A and a spindle outer cylinder 16A disposed on an end portion of the middle shaft 12 at the side of the motor 2, and a spindle inner cylinder 14B and a spindle outer cylinder 16B disposed on an end portion of the middle shaft 12 at the side of the mill roll 6.

The middle shaft 12 of the gear spindle device 10 is coupled to the output shaft of the device at the side of the motor 2 via the spindle inner cylinder 14A and the spindle outer cylinder 16A. In the illustrative embodiment shown in the drawing, a gear box (transmission) 4 is disposed between the motor 2 and the gear spindle device 10. The middle shaft 12 is coupled to the output shaft 5 of the gear box 4 via the spindle inner cylinder 14A and the spindle outer cylinder 16A. The gear box 4 is configured to shift the rotation speed of the rotary driving force generated by the motor 2, and divide the rotary driving force into two. In another embodiment, a motor for driving the mill roll 6 may be connected to the gear spindle device 10 not via the gear box. That is, the middle shaft 12 of the gear spindle device 10 may be coupled to the output shaft of the motor via the spindle inner cylinder 14A and the spindle outer cylinder 16A.

Furthermore, the middle shaft 12 of the gear spindle device 10 is coupled to the axial end portion 6a of the mill roll 6 via the spindle inner cylinder 14B and the spindle outer cylinder 16B.

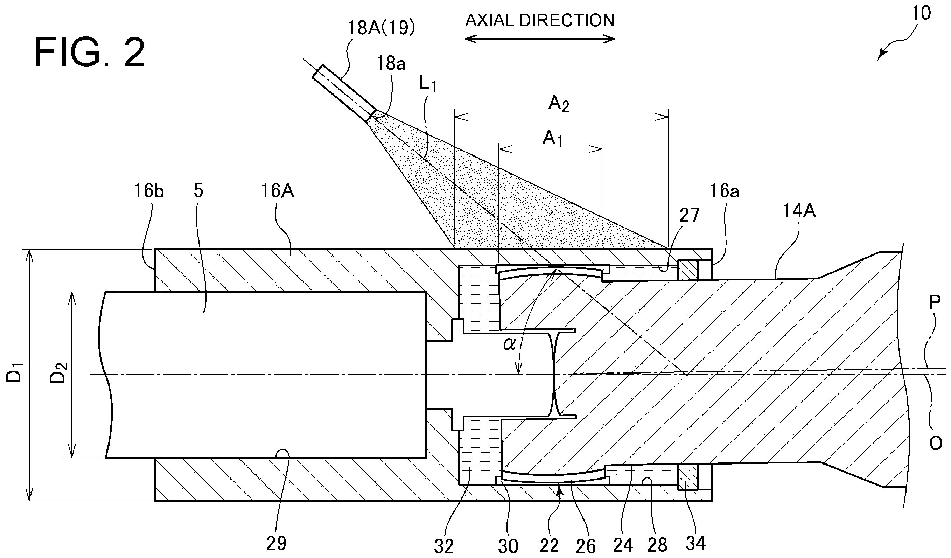

FIG. 2 is a schematic cross-sectional diagram showing an end portion of the gear spindle device 10 at the side of the motor 2 according to an embodiment. Herein, the coupling structure of the gear spindle device 10 and the output shaft of a device at the side of the motor 2 will be described. Nevertheless, a similar description is applicable to the coupling structure between the gear spindle device 10 and the axial end portion 6a of the mill roll 6.

As depicted in FIG. 2, the spindle outer cylinder 16A has a fitting hole 27 having an opening on the end surface at the side of the first end 16a in the axial direction (the direction of the center axis O of the spindle outer cylinder 16A), to which the end portion of the spindle inner cylinder 14A is fitted. Furthermore, the spindle outer cylinder 16A has an inner circumferential surface 28 at the side of the first end 16a (first end), and an inner circumferential gear 30 is disposed on the inner circumferential surface 28. The fitting hole 27 is formed by the inner circumferential surface 28. The spindle inner cylinder 14A has an outer circumferential surface 24 on which an outer circumferential gear 26 is disposed, at an end portion engaging with the fitting hole 27 of the spindle outer cylinder 16A. The end portion of the spindle inner cylinder 14A is fitted with the fitting hole 27 of the spindle outer cylinder 16A, such that the inner circumferential gear 30 of the spindle outer cylinder 16A and the outer circumferential gear 26 of the spindle inner cylinder 14A engage with one another. Accordingly, an engagement portion 22 is formed, which is a portion where the inner circumferential gear 30 of the spindle outer cylinder 16A and the outer circumferential gear 26 of the spindle inner cylinder 14A engage with one another. It should be noted that the inner circumferential gear 30 and the outer circumferential gear 26 are engageable in a state where the center axis P of the spindle inner cylinder 14A is oblique with respect to the center axis O of the spindle outer cylinder 16A.

A lubricant oil is supplied to the engagement portion 22 between the inner circumferential gear 30 of the spindle outer cylinder 16A and the outer circumferential gear 26 of the spindle inner cylinder 14A, via a non-depicted lubricant oil supply passage. A lubricant oil chamber 32 which stores the above described lubricant oil is formed between the inner circumferential surface 28 of the spindle outer cylinder 16A and the outer circumferential surface 24 of the spindle inner cylinder 14A. Furthermore, a seal member 34 for holding the lubricant oil at the engagement portion 22 (that is, for suppressing leakage of the lubricant oil from the lubricant oil chamber 32) is disposed between the inner circumferential surface 28 of the spindle outer cylinder 16A and the outer circumferential surface 24 of the spindle inner cylinder 14A.

As depicted in FIG. 2, the spindle outer cylinder 16A has a fitting hole 29 having an opening on the end surface at the side of the second end 16b opposite to the first end 16a in the axial direction. To the fitting hole 29, an end portion of the output shaft of the device at the side of the motor 2 (in the illustrated example, the output shaft 5 of the gear box 4) is fitted.

In the rolling mill facility 1 configured as described above, the rotary driving force generated by the motor 2 is transmitted to mill rolls 6 via the output shaft at the side of the motor 2, the spindle outer cylinder 16A and the spindle inner cylinder 14A at the side of the motor 2 including the engagement portion 22, the middle shaft 12, and the spindle outer cylinder 16B and the spindle inner cylinder 14B at the side of the mill rolls 6 including the engagement portion.

Next, the gear spindle device 10 according to some embodiments will be described in more detail. As depicted in FIG. 1, in some embodiments, the gear spindle device 10 includes a coolant supply unit 18A for supplying a coolant to the spindle outer cylinder 16A at the side of the motor 2, or a coolant supply unit 18B for supplying a coolant to the spindle outer cylinder 16B at the side of the mill rolls 6. As depicted in FIG. 1 for instance, the coolant supply unit 18A or the coolant supply unit 18B may be provided for each of the pair of gear spindle devices 10.

In the following description, the spindle inner cylinders 14A and 14B will be collectively referred to as the spindle inner cylinder 14, the spindle outer cylinders 16A and 16B will be collectively referred to as the spindle outer cylinder 16, and the coolant supply units18A and 18B will be collectively referred to as the coolant supply unit 18. Furthermore, in the following description, the gear spindle device 10 according to some embodiments will be described referring mainly to the drawings showing a portion of the gear spindle device 10 including the spindle outer cylinder 16A and the coolant supply unit 18A at the side of the motor 2. Nevertheless, a similar description is applicable to the side of the mill rolls 6.

As depicted in FIG. 2, the coolant supply unit 18 is disposed at the opposite side to the seal member 34 across the engagement portion 22 in the axial direction of the spindle outer cylinder 16 (hereinafter, also referred to as merely the axial direction) and configured to supply a coolant toward the spindle outer cylinder 16 in the formation region A1 of the engagement portion 22. The formation region A1 of the engagement portion 22 is a region in the axial direction where the inner circumferential gear 30 and the outer circumferential gear 26 engaging with each other overlap in the axial direction. Herein, as depicted in FIG. 2, typically, the seal member 34 is disposed at a position offset from the engagement portion 22 in a direction from the second end 16b toward the first end 16a of the spindle outer cylinder 16 in the axial direction. That is, the coolant supply unit 18 is disposed at a position offset from the engagement portion 22 in a direction from the first end 16a toward the second end 16b of the spindle outer cylinder 16 in the axial direction. Alternatively, the coolant supply unit 18 has a coolant discharge port 18a at a position offset from the engagement portion 22 in a direction from the first end 16a toward the second end 16b of the spindle outer cylinder 16 in the axial direction.

According to the above embodiment, it is possible to supply the coolant toward the spindle outer cylinder 16 in the formation region A1 of the engagement portion 22 from the coolant supply unit 18 disposed at the opposite side to the seal member 34 across the engagement portion 22 between the inner circumferential gear 30 and the outer circumferential gear 26 disposed at the side of the first end 16a of the spindle outer cylinder 16 (that is, the side opposite to the second end 16b engaged with the output shaft of the motor 2 or the gear box 4 or the axial end portion 6a of the mill roll 6). Thus, it is possible to effectively suppress scattering of the coolant discharged toward the spindle outer cylinder 16 from the coolant supply unit 18, or the coolant discharged accordingly and bounced back at the surface of the spindle outer cylinder 16 toward the devices (e.g., the gear box 4, the motor 2, or the mill rolls 6) coupled to the second end 16b side of the spindle outer cylinder 16. Thus, it is possible to reduce the negative influence on the devices or the material to be rolled due to supply of the coolant.

For instance, by providing the coolant supply unit 18A for supplying the coolant toward the spindle outer cylinder 16A at the side of the motor 2 of the gear spindle device 10, it is possible to suppress breakdown of the gear box 4 or the motor 2 due to incorporation of the coolant. Alternatively, by providing the coolant supply unit 18B for supplying the coolant toward the spindle outer cylinder 16B at the side of the mill rolls 6 of the gear spindle device 10, it is possible to suppress failure in the temperature management of the material to be rolled due to adhesion of the coolant to the material to be rolled, for instance.

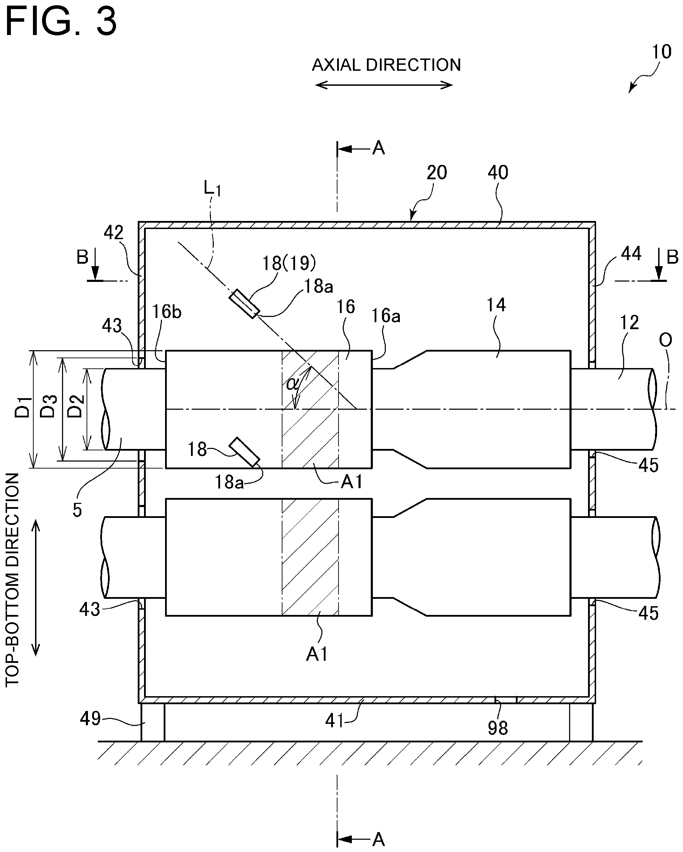

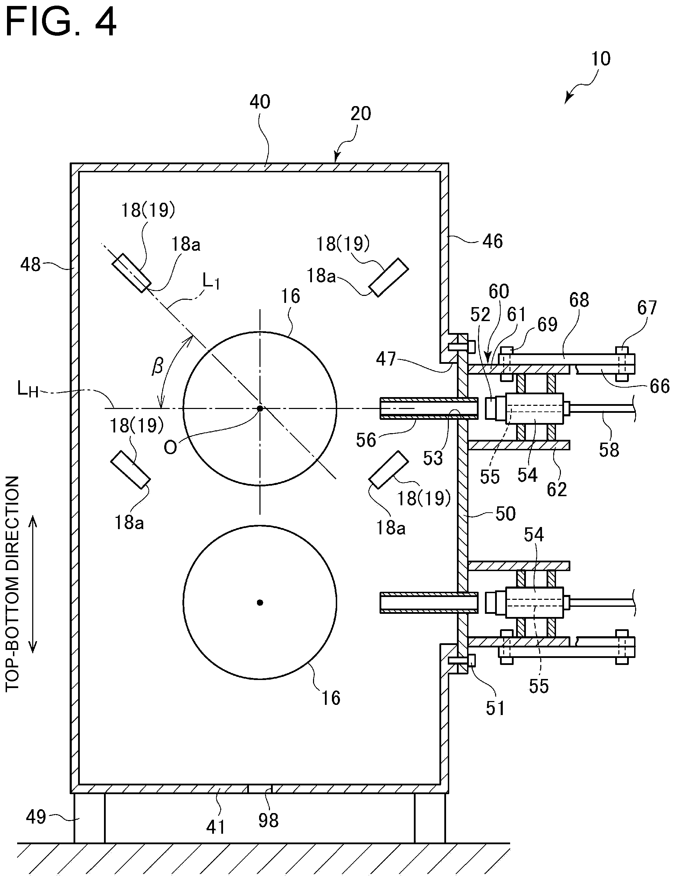

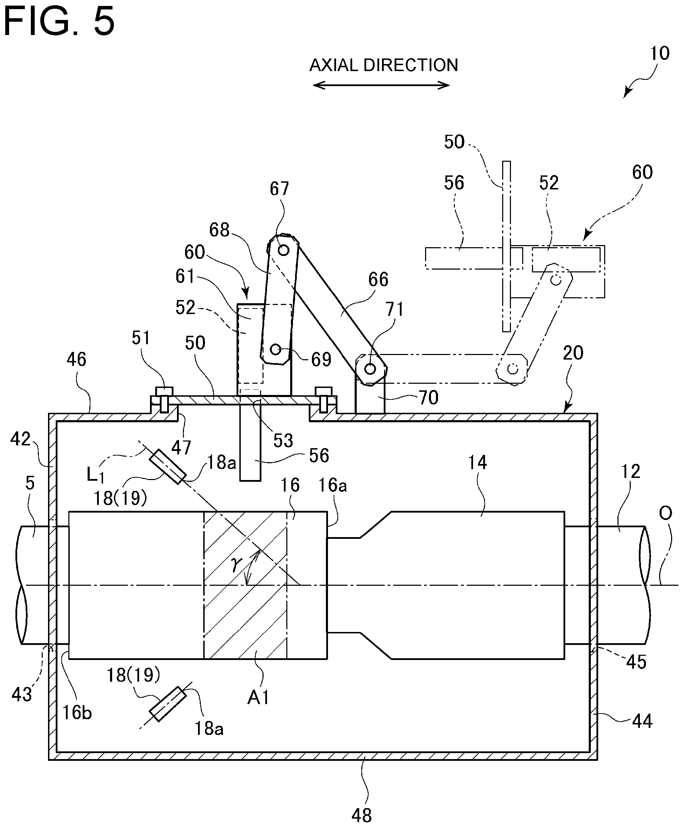

FIGs. 3 to 5 are each a partial cross-sectional diagram of the gear spindle device 10 according to an embodiment. FIG. 3 is a side view of a portion of the gear spindle device 10 at the side of the motor 2. FIG. 4 is an A-A cross-sectional diagram of FIG. 3. FIG. 5 is a B-B cross-sectional diagram of FIG. 3.

In some embodiments, as depicted in FIGs. 1, and 3 to 5, the gear spindle device 10 includes a housing 20 housing the spindle outer cylinder 16 and the coolant supply unit 18 in the formation region A1 of the engagement portion 22.

In the illustrative embodiment depicted in FIGs. 3 to 5, the housing 20 includes an upper wall portion 40 and a lower wall portion 41 disposed at the upper side and the lower side of the spindle outer cylinder 16 and the coolant supply unit 18, respectively, a pair of axial-direction end wall portions 42, 44 disposed at both sides across the spindle outer cylinder 16 and the coolant supply unit 18 in the axial direction, and a pair of lateral wall portions 46, 48 disposed at the lateral sides of the spindle outer cylinder 16 and the coolant supply unit 18. The housing 20 is supported on the base structure via a leg portion 49. In some embodiments, the housing 20 includes at least one of the upper wall portion 40, the lower wall portion 41, the axial-direction end wall portion 42, the axial-direction end wall portion 44, the lateral wall portion 46, or the lateral wall portion 48. For instance, the housing 20 may include the upper wall portion 40, the lower wall portion 41, and the pair of lateral wall portions 46, 48, and not the axial-direction end wall portion 44.

It should be noted that the upper side and the lower side in the present specification refer to the upper side and the lower side in the vertical direction (top-bottom direction).

In the illustrative embodiment depicted in FIGs. 3 to 5, of the pair of axial-direction end wall portions 42, 44, on the axial-direction end wall portion 42 positioned at the side of the second end 16b of the spindle outer cylinder 16, a hole 43 is formed, into which the output shaft of the device at the side of the motor 2 fitting with the end portion of the spindle outer cylinder 16 at the side of the second end 16b (in the drawing, the output shaft 5 of the gear box 4) is inserted. Furthermore, of the pair of axial-direction end wall portions 42, 44, on the axial-direction end wall portion 44 positioned at the side of the first end 16a of the spindle outer cylinder 16, a hole 45 is formed, to which the middle shaft 12 connected to the spindle inner cylinder 14 is inserted.

According to the above described embodiment, the spindle outer cylinder 16 and the coolant supply unit 18 in the formation region A1 of the engagement portion 22 are housed inside the housing 20, and thus it is possible to effectively suppress scattering of the coolant to the devices (i.e., the motor 2 and the gear box 4) coupled to the spindle outer cylinder 16 at the side of the second end 16b.

In some embodiments, the housing 20 includes a first wall portion having a hole into which a shaft fitting to the spindle outer cylinder 16 at the side of the second end 16b of the spindle outer cylinder 16 in the axial direction is inserted, and the hole has a smaller diameter than the spindle outer cylinder 16. In the illustrative embodiment depicted in FIGs. 3 to 5, the housing 20 includes the above-described axial-direction end wall portion 42 as the first wall portion. The axial-direction end wall portion 42 has the above described hole 43 into which the output shaft 5 of the gear box 4 fitting to the spindle outer cylinder 16 at the side of the second end 16b of the spindle outer cylinder 16 is inserted. The diameter D3 of the hole 43 is smaller than the diameter D1 of the spindle outer cylinder 16. Furthermore, the diameter D3 of the hole 43 is greater than the diameter D2 of the output shaft 5 inserted into the hole 43.

According to the above embodiment, the diameter D3 of the hole 43 disposed on the axial-direction end wall portion 42 (first wall portion) of the housing 20, into which the output shaft 5 of the gear box 4 fitting to the spindle outer cylinder 16 is inserted, is smaller than the diameter D1 of the spindle outer cylinder 16, and thus it is possible to effectively suppress scattering of the coolant to the gear box4 .

In some embodiments, as depicted in FIGs. 1 to 4 for instance, the coolant supply unit 18 is configured to inject the coolant toward the spindle outer cylinder 16 from a position above the spindle outer cylinder 16. That is, the coolant discharge port 18a of the coolant supply unit 18 is positioned above the spindle outer cylinder 16 to be cooled by the coolant supply unit 18.

According to the above described embodiment, the coolant supply unit 18 injects the coolant toward the spindle outer cylinder 16 from the position above the spindle outer cylinder 16, and thus the injected coolant reaches the spindle outer cylinder 16 more reliably, compared to a case where the coolant is injected toward the spindle outer cylinder 16 from a position below the spindle outer cylinder 16. Thus, it is possible to effectively suppress scattering of the coolant toward the devices (the gear box 4 or the mill rolls 6, for instance) coupled to the spindle outer cylinder 16 at the side of the second end 16b, while effectively cooling the cooling target portion (the spindle outer cylinder 16 in the formation region A1 of the engagement portion 22) of the gear spindle device 10.

**In** the illustrative embodiment depicted in FIGs. 1 to 5, the coolant supply unit 18 includes a nozzle 19 configured to inject the coolant toward the spindle outer cylinder 16 in the formation region A1 of the engagement portion 22.

According to the above described embodiment, the coolant supply unit 18 includes the nozzle 19, and thus it is easier to adjust the injection angle of the coolant from the nozzle 19 and the supply range of the coolant to the spindle outer cylinder 16. Thus, it is possible to effectively suppress scattering of the coolant toward the devices (the gear box 4 or the mill rolls 6, for instance) coupled to the spindle outer cylinder 16 at the side of the second end 16b, while cooling the cooling target portion of the gear spindle device 10 effectively.

In some embodiments, as depicted in FIGs. 4 and 5, in a planar view, a pair of nozzles 19 (the coolant supply units 18) are disposed on either side of the spindle outer cylinder 16 across the center axis O. Accordingly, it is possible to cool the cooling-target portion of the gear spindle device 10 more effectively.

In some embodiments, as depicted in FIGs. 2, 3 and 5 for instance, the nozzle 19 (coolant supply unit 18) is configured to inject the coolant in a direction from the second end 16b toward the first end 16a of the spindle outer cylinder 16 in the axial direction.

According to the above-described embodiment, with the nozzle 19 (coolant supply unit 18), the coolant is injected in a direction from the second end 16b (the side where the devices are coupled) toward the first end 16a (the side where the spindle inner cylinder 14 is disposed) of the spindle outer cylinder 16, and thus it is possible to effectively suppress scattering of the coolant toward the devices (the gear box 4 or the mill rolls 6, for instance) coupled to the spindle outer cylinder 16 at the side of the second end 16b.

In some embodiments, as depicted in FIG. 2 for instance, the nozzle 19 (the coolant supply unit 18) is configured to supply the coolant to the spindle outer cylinder 16 in the formation region A1 of the engagement portion 22 from a position farther from the seal member 34 in the axial direction than the supply region A2 of the coolant of the spindle outer cylinder 16. That is, the coolant discharge port 18a of the nozzle (coolant supply unit 18) is positioned at a position offset in a direction from the first end 16a toward the second end 16b in the axial direction from the supply region A2 of the coolant. The supply region A2 of the coolant is determined in accordance with the direction, angle, pressure, and the like of injection of the coolant by the nozzle 19 (coolant supply unit 18).

According to the embodiment, the nozzle 19 (the coolant supply unit 18) supplies the coolant toward the spindle outer cylinder 16 in the formation region A1 of the engagement portion 22 from a position farther from the seal member 34 in the axial direction than the supply region A2 of the coolant, and thus it is possible to effectively suppress scattering of the coolant toward the devices (the gear box 4 or the mill rolls 6, for instance) coupled to the spindle outer cylinder 16 at the side of the second end 16b.

In some embodiments, when the spindle outer cylinder 16 is seen in a horizontal direction which is orthogonal to the center axis O of the spindle outer cylinder 16 (see FIG. 3), the angular degree α between the center axis L1 of the nozzle 19 and the center axis O of the spindle outer cylinder 16 is not smaller than 30 degrees and not greater than 60 degrees.

According to the above described embodiment, the above described angular degree α is not smaller than 30 degrees and not greater than 60 degrees, and thus it is possible to ensure a large contact area between the spindle outer cylinder 16 and the coolant. Thus, it is possible to cool the cooling target portion of the gear spindle device 10 effectively. Furthermore, if the above described angular degree is not greater than 60 degrees, the coolant injected from the nozzle 19 and bounced back on the surface of the spindle outer cylinder 16 is more likely to be oriented in a direction from the second end 16b (the side where the devices are coupled) toward the first end 16a (the side where the spindle inner cylinder 14 is disposed) of the spindle outer cylinder 16. Thus, it is possible to effectively suppress scattering of the coolant toward the devices (the gear box 4 or the mill rolls 6, for instance) coupled to the spindle outer cylinder 16 at the side of the second end 16b.

In some embodiments, when the spindle outer cylinder 16 is seen in the axial direction (see FIG. 4), the angular degree β formed between the center axis L1 of the nozzle 19 and the horizontal direction (line L_{H} in FIG.4) is not smaller than 30 degrees and not greater than 60 degrees.

According to the above described embodiment, the above described angular degree β is not smaller than 30 degrees and not greater than 60 degrees, and thus it is possible to ensure a large contact area between the spindle outer cylinder 16 and the coolant. Thus, it is possible to cool the cooling target portion of the gear spindle device 10 effectively.

In some embodiments, when the spindle outer cylinder 16 is seen in a planar view (see FIG.5), the angular degree γ between the center axis L1 of the nozzle 19 and the center axis O of the spindle outer cylinder 16 is not smaller than 30 degrees and not greater than 60 degrees.

According to the above described embodiment, the above described angular degree γ is not smaller than 30 degrees and not greater than 60 degrees, and thus it is possible to ensure a large contact area between the spindle outer cylinder 16 and the coolant. Thus, it is possible to cool the cooling target portion of the gear spindle device 10 effectively.

As depicted in FIGs. 4 and 5, in some embodiments, the gear spindle device 10 includes a temperature sensor 52 configured to measure the temperature of the spindle outer cylinder 16 in the formation region A1 of the engagement portion 22.

According to the above described embodiment, it is possible to measure the temperature of the spindle outer cylinder 16 in the formation region A1 of the engagement portion 22 with the temperature sensor 52, and thus it is possible to confirm if the cooling target portion (i.e., the spindle outer cylinder 16 in the formation region A1 of the engagement portion 22) is cooled appropriately on the basis of the temperature measured by the temperature sensor 52. Thus, it is possible to suppress scattering of the coolant toward the devices (the gear box 4 or the mill rolls 6, for instance) coupled to the spindle outer cylinder 16 at the side of the second end 16b effectively, while cooling the cooling target portion of the gear spindle device 10 more reliably.

**In** some embodiments, as depicted in FIG. 5 for instance, the temperature sensor 52 is disposed at a position offset from the coolant supply unit 18 in a direction from the second end 16b toward the first end 16a of the spindle outer cylinder 16 in the axial direction of the spindle outer cylinder 16.

According to the above described embodiment, the temperature sensor 52 is disposed at a position offset from the coolant supply unit 18 in a direction from the second end 16b toward the first end 16a of the spindle outer cylinder 16 in the axial direction, and thus it is possible to measure the temperature in the vicinity of the portion of the spindle outer cylinder 16 to which the coolant is supplied (the formation region A1 of the engagement portion 22) with the temperature sensor 52. Thus, it is possible to check if the cooling target portion is appropriately cooled more accurately, on the basis of the temperature measured by the temperature sensor 52.

In some embodiments, the temperature sensor 52 is configured to measure the temperature of the spindle outer cylinder 16 in the formation region A1 of the engagement portion 22 using infrared light. That is, the temperature sensor 52 has a light receiving portion for receiving infrared light discharged from the spindle outer cylinder 16 in the formation region A1 of the engagement portion 22, and is configured to obtain the temperature of the above described spindle outer cylinder 16 on the basis of the detection result of infrared light obtained by the light receiving portion.

In some embodiments, as depicted in FIGs. 4 and 5 for instance, the gear spindle device 10 includes, between the temperature sensor 52 and the spindle outer cylinder 16, a pipe 56 through which infrared light traveling toward the temperature sensor 52 from the spindle outer cylinder 16 in the formation region A1 of the engagement portion 22 is capable of passing. The pipe 56 extends along the light receiving direction of infrared light by the light receiving portion of the temperature sensor 52.

In the above described embodiment, the above described pipe 56 is disposed between the temperature sensor 52 and the spindle outer cylinder 16, and thus the pipe 56 prevents the coolant discharged from the coolant supply unit 18 or the coolant bounced back at the spindle outer cylinder 16 from reaching the temperature sensor 52, which makes it easier to ensure a path of infrared light between the temperature sensor 52 and the spindle outer cylinder 16. Thus, it is possible to measure the temperature of the spindle outer cylinder 16 more accurately with the temperature sensor 52.

In some embodiments, as depicted in FIG. 4 for instance, the gear spindle device 10 includes a gas supply part 58 configured to supply gas to the pipe 56 so as to form a gas flow flowing from the temperature sensor 52 toward the spindle outer cylinder 16 inside the pipe 56. The gas supply part 58 includes a gas supply pipe disposed between a gas supply source and the pipe 56. As depicted in FIG. 4, the gas supply part 58 may be configured to supply gas toward the pipe 56 through a through hole 55 disposed on a sensor holding portion 54 holding the temperature sensor 52.

In the above described embodiment, with the gas supply part 58, it is possible to form a gas flow flowing from the temperature sensor 52 toward the spindle outer cylinder 16 inside the pipe 56. Accordingly, the coolant discharged from the coolant supply unit 18 or the coolant bounced back at the spindle outer cylinder 16 is less likely to enter the inside of the pipe 56. Furthermore, even if the coolant enters the inside of the pipe 56, it is possible to let the coolant out the pipe 56 with the above described gas flow. Thus, it is possible to measure the temperature of the spindle outer cylinder 16 more accurately with the temperature sensor 52.

In some embodiments, as depicted in FIGs. 4 and 5 for instance, the housing 20 of the gear spindle device 10 includes a lateral wall portion 46 (second wall portion) having an opening portion 47. Furthermore, the gear spindle device 10 includes a lid portion 50 capable of opening and closing the opening portion 47. The above described temperature sensor 52 is supported on the lid portion 50. In FIG. 5, the lid portion 50, the temperature sensor 52, and the like in a state where the opening portion 47 is open are shown in two-dotted chain lines.

In the illustrative embodiment depicted in FIGs. 4 and 5, the temperature sensor 52 is supported on the lid portion 50 via a support portion 60 including support plates 61, 62 fixed to the lid portion 50. Furthermore, when the lid portion 50 closes the opening portion 47, the lid portion 50 is fastened to the lateral wall portion 46 with a bolt 51. Furthermore, when the opening portion 7 is opened, the lid portion 50 is removed from the lateral wall portion 46 by removing the bolt 51.

According to the above described embodiment, the temperature sensor 52 is supported by the lid portion 50 capable of opening and closing the opening portion 47 disposed on the housing 20, and thus it is possible to perform maintenance on the temperature sensor 52 together when performing maintenance on the gear spindle device 10 by opening the opening portion 47. Thus, it is possible to perform maintenance efficiently on the gear spindle device 10, where the coolant is supplied to the spindle outer cylinder 16.

In an embodiment, in addition to the temperature sensor 52, the above described pipe 56 and/or the gas supply part 58 may be supported on the lid portion 50.

In an embodiment, as depicted in Figs. 4 and 5 for instance, the pipe 56 may be inserted into a hole 53 disposed on the lid portion 50. The pipe 56 may be fixed to the lid portion 50 by welding, for instance.

In an embodiment, as depicted in FIGs. 4 and 5 for instance, an end portion of the gas supply pipe of the gas supply part 58 may be connected to the sensor holding portion 54 holding the temperature sensor 52. As described above, the gas supply part 58 may be supported on the lid portion 50 via the support portion 60 with the sensor holding portion 54 and the temperature sensor 52.

Accordingly, by supporting the pipe 56 and/or the gas supply part 58 with the lid portion 50, it is possible to perform maintenance on the pipe 56 and/or the gas supply part 58 together when performing maintenance on the gear spindle device 10 by opening the opening portion 47. Thus, it is possible to perform maintenance efficiently on the gear spindle device 10, where the coolant is supplied to the spindle outer cylinder 16.

In an embodiment, the gas supply pipe of the gas supply part 58 may be formed of a flexible material. In this case, the gas supply pipe has flexibility, and thus it is possible to open and close the lid portion 50 easily without removing the gas supply pipe.

In some embodiments, as depicted in FIGs. 4 and 5 for instance, the gear spindle device 10 includes an arm 66, 68 for connecting the lid portion 50 and the lateral wall portion 46 (second wall portion), and a hinge 67, 69, 71 for supporting the arm 66, 68 to the lid portion 50 or the lateral wall portion 46 (second wall portion) rotatably. In the embodiment depicted in FIGs. 4 and 5, the arm 66, 68 is supported on the lid portion 50 via the support portion 60, and is supported on the lateral wall portion 46 via a protruding portion 70 protruding toward the lateral side from the lateral wall portion 46. The arm 66, 68 is rotatable by the hinge 67, 69, 71.

With the above configuration, the arm 66, 68 for connecting the lid portion 50 and the lateral wall portion 46 (second wall portion), and the hinge 67, 69, 71 for supporting the arm 66, 68 on the lid portion 50 or the lateral wall portion 46 (second wall portion) rotatably are provided, and thus it is possible to easily open and close the lid portion 50 having an increased weight from supporting the temperature sensor 52.

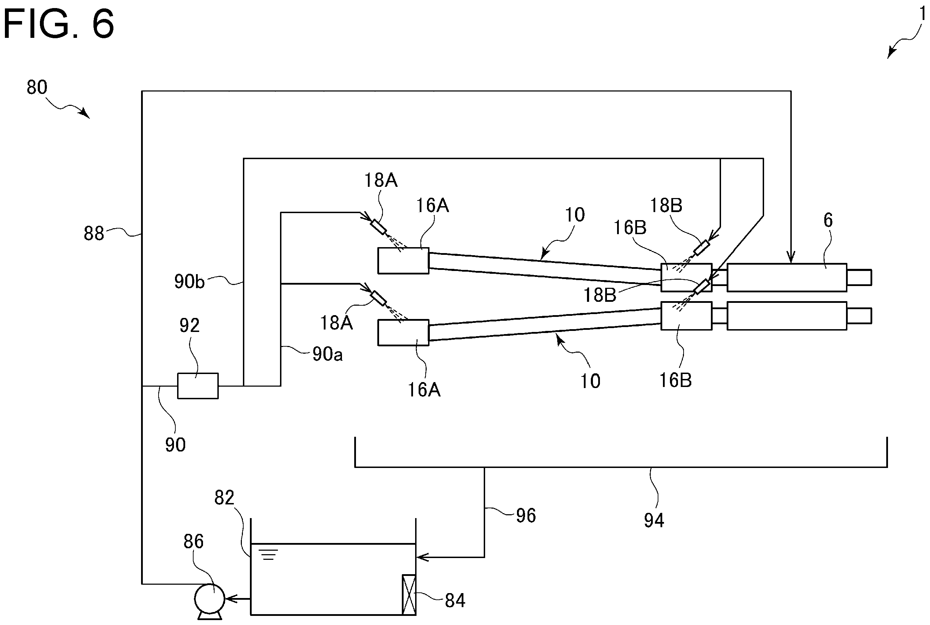

FIG. 6 is a schematic configuration diagram of the rolling mill facility 1 including the gear spindle device 10 according to an embodiment. In the illustrative embodiment depicted in FIG. 6, the rolling mill facility 1 includes a coolant circulation device 80. The coolant circulation device 80 is configured to circulate the coolant supplied to the spindle outer cylinder 16 and the mill roll 6 of the gear spindle device 10.

The coolant circulation device 80 depicted in FIG. 6 includes a coolant receiving portion 94 for receiving and collecting the coolant supplied to the spindle outer cylinder 16 and the coolant supplied to the mill roll 6, a first supply line 90 for supplying the coolant from the coolant receiving portion 94 to the coolant supply unit 18, and a second supply line 88 for supplying the coolant from the coolant receiving portion 94 to the mill roll 6.

The coolant circulation device 80 includes a tank 82 for storing the coolant. The coolant collected by the coolant receiving portion 94 is guided to the tank via a tank introduction line 96.

The coolant circulation device 80 includes a first temperature adjustment part 84 for adjusting the temperature of the coolant inside the tank 82 to the temperature suitable for cooling the mill roll 6. The first temperature adjustment part 84 may include a heater for heating the coolant inside the tank 82. The coolant inside the tank 82 having a temperature adjusted by the first temperature adjustment part 84 is pumped to the first supply line 90 and the second supply line 88 via the pump 86.

The coolant circulation device 80 includes a second temperature adjustment part 92 for adjusting the temperature of the coolant flowing through the first supply line 90 to the temperature suitable for cooling the spindle outer cylinder 16. The second temperature adjustment part 92 may include a cooler for cooling the coolant flowing through the first supply line 90. The first supply line 90 includes a branch line 90a and a branch line 90b. The coolant whose temperature is adjusted by the second temperature adjustment part 92 is supplied to the coolant supply unit 18A for cooling the spindle outer cylinder 16A at the side of the motor 2 via the branch line 90a, and to the coolant supply unit 18B at the side of the mill roll 6 via the branch line 90b.

The coolant supplied to the mill roll 6 and the coolant supplied to the spindle outer cylinder 16 are each collected to the coolant receiving portion 94 via a non-depicted path. The coolant supplied to the spindle outer cylinder 16 may be guided to the coolant receiving portion 94 via a discharge port 98 disposed on the housing 20 and a drain pipe (not depicted) connected to the discharge port 98.

According to the above described embodiment, the coolant supplied to each of the spindle outer cylinder 16 and the mill roll 6 is collected by the coolant receiving portion 94, and the coolant is supplied to the coolant supply unit 18 via the first supply line 90 and to the mill roll 6 via the second supply line 88, respectively. That is, in the above described embodiment, the coolant supplied to the spindle outer cylinder 16 is also used as the coolant supplied to the mill roll 6. Thus, compared to a case where the cooling mechanism for the spindle outer cylinder 16 and the coolant mechanism for the mill roll 6 are provided separately, it is possible to effectively suppress scattering of the coolant toward the devices (the gear box 4 or the mill roll 6, for instance) coupled to the side of the second end 16b of the spindle outer cylinder 16 while reducing the installation space and cost of the devices.

Hereinafter, configurations found in the gear spindle device for a rolling mill, the rolling mill facility, and the method of cooling a gear spindle device for a rolling mill disclosed herein will be described in summary.
(1) According to at least one configuration, a gear spindle device (10) for a rolling mill includes: a spindle outer cylinder having, at a first end side, an inner circumferential surface provided with an inner circumferential gear; a spindle inner cylinder having an outer circumferential surface provided with an outer circumferential gear which engages with the inner circumferential gear; a seal member disposed between the spindle outer cylinder and the spindle inner cylinder, for holding a lubricant oil at an engagement portion between the inner circumferential gear and the outer circumferential gear; and a coolant supply unit disposed at an opposite side to the seal member across the engagement portion in an axial direction of the spindle outer cylinder, for supplying a coolant toward the spindle outer cylinder in a formation region of the engagement portion where the engagement portion is formed.
   According to the above configuration (1), the coolant is supplied toward the spindle outer cylinder in the formation region of the engagement portion from the coolant supply unit disposed at the opposite side to the seal member across the engagement portion between the inner circumferential gear and the outer circumferential gear disposed at the side of the first end of the spindle outer cylinder, and thus it is possible to effectively suppress scattering of the coolant toward the devices (e.g., the gear box, the motor, or the mill rolls) coupled to the second end side of the spindle outer cylinder. Thus, it is possible to reduce the negative influence on the devices or the material to be rolled due to supply of the coolant. For instance, it is possible to suppress breakdown of the gear box or the motor due to intrusion of the coolant, failure in temperature management of the material to be rolled due to adhesion of the coolant to the material to be rolled, and the like.
(2) In some specific configurations, in the above configuration (1), the gear spindle device for a rolling mill includes a housing which houses the coolant supply unit and the spindle outer cylinder in the formation region of the engagement portion.
   According to the above configuration (2), the spindle outer cylinder and the coolant supply unit in the formation region of the engagement portion is housed inside the housing, and thus it is possible to effectively suppress scattering of the coolant to the devices coupled to the second end side of the spindle outer cylinder.
(3) In some specific configurations, in the above configuration (2), the housing includes a first wall portion having a hole into which a shaft fitting with the spindle outer cylinder at a second end side of the spindle outer cylinder in the axial direction is inserted, the hole having a smaller diameter than the spindle outer cylinder.
   According to the above configuration (3), the diameter of the hole which is disposed on the first wall portion of the housing and into which the shaft fitting to the spindle outer cylinder (e.g., the output shaft of the motor or the gear box, for instance) is inserted is smaller than the diameter of the spindle outer cylinder, and thus it is possible to effectively suppress scattering of the coolant to devices including the above described shaft.
(4) In some specific configurations, in any one of the above configurations (1) to (3), the coolant supply unit is configured to inject the coolant toward the spindle outer cylinder from a position above the spindle outer cylinder.
   According to the above configuration (4), the coolant supply unit injects the coolant toward the spindle outer cylinder from a position above the spindle outer cylinder, and thus the injected coolant reaches the spindle outer cylinder more reliably, compared to a case where the coolant is injected toward the spindle outer cylinder from a position below the spindle outer cylinder. Thus, it is possible to effectively suppress scattering of the coolant toward the devices coupled to the second end side of the spindle outer cylinder, while effectively cooling the cooling target portion of the gear spindle device.
(5) In some specific configurations, in any one of the above configurations (1) to (4), the coolant supply unit includes a nozzle configured to inject the coolant toward the spindle outer cylinder in the formation region of the engagement portion.
   According to the above configuration (5), the coolant supply unit includes the nozzle, and thus it is easier to adjust the injection angle of the coolant from the nozzle and the supply range of the coolant to the spindle outer cylinder. Thus, it is possible to effectively suppress scattering of the coolant toward the devices coupled to the second end side of the spindle outer cylinder, while effectively cooling the cooling target portion of the gear spindle device.
(6) In some specific configurations, in the above configuration (5), the nozzle is configured to inject the coolant in a direction from a second end side toward the first end side of the spindle outer cylinder in the axial direction.
   According to the above configuration (6), with the nozzle, the coolant is injected in a direction from the second end (the side where the devices are coupled) toward the first end (the side where the spindle inner cylinder is disposed) of the spindle outer cylinder, and thus it is possible to suppress scattering of the coolant toward the devices coupled to the spindle outer cylinder at the side of the second end more effectively. Thus, it is possible to reduce the negative influence on the devices or the material to be rolled due to supply of the coolant.
(7) In some specific configurations, in the above configuration (6), when the spindle outer cylinder is seen in a horizontal direction which is orthogonal to a center axis of the spindle outer cylinder, an angular degree formed between a center axis of the nozzle and the center axis of the spindle outer cylinder is not smaller than 30 degrees and not smaller than 60 degrees.
   According to the above configuration (7), when the spindle outer cylinder is seen in a horizontal direction which is orthogonal to the center axis of the spindle outer cylinder, the angular degree formed between the center axis of the nozzle and the center axis of the spindle outer cylinder is not smaller than 30 degrees and not greater than 60 degrees, and thus it is easier to ensure a large contact area between the spindle outer cylinder and the coolant. Thus, it is possible to cool the cooling target portion of the gear spindle device effectively. Furthermore, if the above described angular degree is not greater than 60 degrees, the coolant injected from the nozzle and bounced back on the surface of the spindle outer cylinder is more likely to be oriented in a direction from the second end (the side where the devices are coupled) toward the first end (the side where the spindle inner cylinder is disposed) of the spindle outer cylinder. Thus, it is possible to suppress scattering of the coolant toward the devices coupled to the spindle outer cylinder at the side of the second end more effectively. Thus, according to the above configuration (7), it is possible to effectively suppress scattering of the coolant toward the devices coupled to the second end side of the spindle outer cylinder, while effectively cooling the cooling target portion of the gear spindle device.
(8) In some specific configurations, in any one of the above configurations (5) to (7), when the spindle outer cylinder is seen in the axial direction, an angular degree formed between a center axis of the nozzle and a horizontal direction is not smaller than 30 degrees and not smaller than 60 degrees.
   According to the above configuration (8), when the spindle outer cylinder is seen in the axial direction, the angular degree formed between the center axis of the nozzle and the horizontal direction is not smaller than 30 degrees and not greater than 60 degrees, and thus it is possible to ensure a large contact area between the spindle outer cylinder and the coolant. Thus, it is possible to cool the cooling target portion of the gear spindle device effectively. Thus, according to the above configuration (8), it is possible to effectively suppress scattering of the coolant toward the devices coupled to second end side of the spindle outer cylinder, while effectively cooling the portion to be cooled of the gear spindle device.
(9) In some specific configurations, in any one of the above configurations (1) to (8), the gear spindle device for a rolling mill includes a temperature sensor configured to measure a temperature of the spindle outer cylinder in the formation region of the engagement portion.
   According to the above configuration (9), it is possible to measure the temperature of the spindle outer cylinder in the formation region of the engagement portion with the temperature sensor, and thus it is possible to confirm if the cooling target portion is cooled appropriately on the basis of the temperature measured by the temperature sensor. Thus, it is possible to effectively suppress scattering of the coolant toward the devices coupled to the second end side of the spindle outer cylinder, while cooling the cooling target portion of the gear spindle device even more reliably.
(10) In some specific configurations, in the above configuration (9), the temperature sensor is disposed at a position offset from the coolant supply unit in a direction from a second end side toward the first end side of the spindle outer cylinder in the axial direction.
   According to the above configuration (10), the temperature sensor is disposed at a position offset from the coolant supply unit in a direction from the second end toward the first end of the spindle outer cylinder in the axial direction, and thus it is possible to measure the temperature in the vicinity of the portion of the spindle outer cylinder to which the coolant is supplied with the temperature sensor. Thus, it is possible to check if the cooling target portion is appropriately cooled, on the basis of the measured temperature. Thus, it is possible to effectively suppress scattering of the coolant toward the devices coupled to the second end side of the spindle outer cylinder, while cooling the cooling target portion of the gear spindle device even more reliably.
(11) In some specific configurations, in the above configuration (9) or (10), the gear spindle device for a rolling mill includes: a housing which houses the engagement portion and the coolant supply unit. The housing includes a second wall portion having an opening portion, the housing has a lid portion capable of opening and closing the opening portion, and the temperature sensor is supported on the lid portion.
   According to the above configuration (11), the temperature sensor is supported by the lid portion capable of opening and closing the opening portion provide for the housing, and thus it is possible to perform maintenance on the temperature sensor together when performing maintenance on the gear spindle device by opening the opening portion. Thus, it is possible to perform maintenance efficiently on the gear spindle device, where the coolant is supplied to the spindle outer cylinder.
(12) In some specific configurations, in the above configuration (11), the gear spindle device for a rolling mill includes: an arm for connecting the lid portion and the second wall portion; and a hinge for supporting the arm on the lid portion or the second wall portion rotatably.
   According to the above configuration (12), the arm for connecting the lid portion and the second wall portion and the hinge for supporting the arm on the lid portion or the second wall portion rotatably are provided, and thus it is possible to easily open and close the lid portion having an increased weight from supporting the temperature sensor.
(13) According to at least one configuration, a rolling mill facility includes: a mill roll; a motor for driving the mill roll; and the gear spindle device according to any one of the above (1) to (12) configured to transmit a rotational driving force generated by the motor to the mill roll.
   According to the above configuration (13), the coolant is supplied toward the spindle outer cylinder in the formation region of the engagement portion from the coolant supply unit disposed at the opposite side to the seal member across the engagement portion between the inner circumferential gear and the outer circumferential gear disposed at the first end side of the spindle outer cylinder, and thus it is possible to effectively suppress scattering of the coolant toward the devices (e.g., the gear box, the motor, or the mill rolls) coupled to the second end side of the spindle outer cylinder. Thus, it is possible to reduce the negative influence on the devices or the material to be rolled from supply of the coolant. For instance, it is possible to suppress breakdown of the gear box or the motor due to intrusion of the coolant, failure in temperature management of the material to be rolled due to adhesion of the coolant to the material to be rolled, and the like.
(14) In some specific configurations, in the above configuration (13), the rolling mill facility includes: a coolant circulation device for circulating the coolant supplied to the spindle outer cylinder and the coolant supplied to the mill roll. The coolant circulation device includes: a coolant receiving portion for receiving and collecting the coolant supplied to the spindle outer cylinder and the coolant supplied to the mill roll; a first supply line for supplying the coolant from the coolant receiving portion to the coolant supply unit; and a second supply line for supplying the coolant from the coolant receiving portion to the mill roll.
   According to the above configuration (14), the coolant circulation device is provided, and the coolant collected by the coolant receiving portion is supplied to the coolant supply unit via the first supply line and to the mill roll via the second supply line, respectively. That is, according to the above configuration (14), the coolant supplied to the spindle outer cylinder is also used as the coolant supplied to the mill roll. Thus, compared to a case where the cooling mechanism for the spindle outer cylinder and the coolant mechanism for the mill roll are provided separately, it is possible to effectively suppress scattering of the coolant toward the devices coupled to the second end side of the spindle outer cylinder while reducing the installation space and cost of the devices.
(15) According to at least one configuration, a method for cooling a gear spindle device for a rolling mill including: a spindle outer cylinder having, at a first end side, an inner circumferential surface provided with an inner circumferential gear; a spindle inner cylinder having an outer circumferential surface provided with an outer circumferential gear which engages with the inner circumferential gear; and a seal member disposed between the spindle outer cylinder and the spindle inner cylinder, for holding a lubricant oil at an engagement portion between the inner circumferential gear and the outer circumferential gear, includes: a step of supplying a coolant toward the spindle outer cylinder in a formation region of the engagement portion where the engagement portion is formed from a position at an opposite side to the seal member across the engagement portion in an axial direction of the spindle outer cylinder.
   According to the above method (15), the coolant is supplied toward the spindle outer cylinder in the formation region of the engagement portion from a position at the opposite side to the seal member across the engagement portion of the inner circumferential gear and the outer circumferential gear disposed at the side of the first end of the spindle outer cylinder, and thus it is possible to effectively suppress scattering of the coolant toward the devices (e.g., the gear box, the motor, or the mill rolls) coupled to the second end side of the spindle outer cylinder. Thus, it is possible to reduce the negative influence on the devices or the material to be rolled due to supply of the coolant. For instance, it is possible to suppress breakdown of the gear box or the motor due to intrusion of the coolant, failure in temperature management of the material to be rolled due to adhesion of the coolant to the material to be rolled, and the like.

Embodiments of the present invention were described in detail above, but the present invention is not limited thereto, and various amendments and modifications may be implemented within the scope defined by the appended claims.

Further, in the present specification, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

### Reference Signs List

- 1: Rolling mill facility
- 2: Motor
- 4: Gear box
- 5: Output shaft
- 6: Mill roll
- 6a: Axial end portion
- 6b: Axial end portion
- 10: Gear spindle device
- 12: Middle shaft
- 14, 14A, 14B: Spindle inner cylinder
- 16, 16A, 16B: Spindle outer cylinder
- 16a: First end
- 16b: Second end
- 18, 18A,18B: Coolant supply unit
- 18a: Coolant discharge port
- 19: Nozzle
- 20: Housing
- 22: Engagement portion
- 24: Outer circumferential surface
- 26: Outer circumferential gear
- 27: Fitting hole
- 28: Inner circumferential surface
- 29: Fitting hole
- 30: Inner circumferential gear
- 32: Lubricant oil chamber
- 34: Seal member
- 40: Upper wall portion
- 41: Lower wall portion
- 42: Axial-direction end wall portion
- 43: Hole
- 44: Axial-direction end wall portion
- 45: Hole
- 46: Lateral wall portion
- 47: Opening portion
- 48: Lateral wall portion
- 49: Leg portion
- 50: Lid portion
- 51: Bolt
- 52: Temperature sensor
- 53: Hole
- 54: Sensor holding portion
- 55: Through hole
- 56: Pipe
- 58: Gas supply part
- 60: Support portion
- 61: Support plate
- 62: Support plate
- 66: Arm
- 67: Hinge
- 68: Arm
- 69: Hinge
- 70: Protruding portion
- 71: Hinge
- 80: Coolant circulation device
- 82: Tank
- 84: First temperature adjustment part
- 86: Pump
- 88: Second supply line
- 90: First supply line
- 90a: Branch line
- 90b: Branch line
- 92: Second temperature adjustment part
- 94: Coolant receiving portion
- 96: Tank introduction line
- 98: Discharge port
- A1: Formation region
- A2: Coolant supply region

## Claims

1. A gear spindle device for a rolling mill, comprising:
a spindle outer cylinder (16) having, at a first end side (16a), an inner circumferential surface (28) provided with an inner circumferential gear (30);
a spindle inner cylinder (14) having an outer circumferential surface (24) provided with an outer circumferential gear (26) which engages with the inner circumferential gear (30);
a seal member (34) disposed between the spindle outer cylinder (16) and the spindle inner cylinder (14), for holding a lubricant oil at an engagement portion (22) between the inner circumferential gear (30) and the outer circumferential gear (26); and
a coolant supply unit (18) for supplying a coolant toward the spindle outer cylinder (16),
**characterized in that**
the coolant supply unit (18) is disposed at an opposite side to the seal member (34) across the engagement portion (22) in an axial direction of the spindle outer cylinder (16), for supplying the coolant toward the spindle outer cylinder (16) in a formation region of the engagement portion (22) where the engagement portion (22) is formed, and
the coolant supply unit (18) includes a nozzle (19) configured to inject the coolant toward the spindle outer cylinder (16) in the formation region of the engagement portion (22), wherein the nozzle (19) is configured to inject the coolant in a direction from a second end side (16b) toward the first end side (16a) of the spindle outer cylinder (16) in the axial direction, and the spindle outer cylinder (16) is configured for coupling a gear box, a motor, or a mill roll of the rolling mill to its second end side (16b).

2. A gear spindle device for a rolling mill, comprising:
a spindle outer cylinder (16) having, at a first end side (16a), an inner circumferential surface (28) provided with an inner circumferential gear (30);
a spindle inner cylinder (14) having an outer circumferential surface (24) provided with an outer circumferential gear (26) which engages with the inner circumferential gear (30);
a seal member (34) disposed between the spindle outer cylinder (16) and the spindle inner cylinder (14), for holding a lubricant oil at an engagement portion (22) between the inner circumferential gear (30) and the outer circumferential gear (26); and
a coolant supply unit (18) for supplying a coolant toward the spindle outer cylinder (16),
**characterized in that**
the coolant supply unit (18) is disposed at an opposite side to the seal member (34) across the engagement portion (22) in an axial direction of the spindle outer cylinder (16), for supplying the coolant toward the spindle outer cylinder (16) in a formation region of the engagement portion (22) where the engagement portion (22) is formed, and
the gear spindle device comprises a housing (20) which houses the coolant supply unit (18) and the spindle outer cylinder (16) in the formation region of the engagement portion (22).

3. The gear spindle device for a rolling mill according to claim 2,
wherein the housing (20) includes a first wall portion (42) having a hole (43) into which a shaft (5) fitting with the spindle outer cylinder (16) at a second end side (16b) of the spindle outer cylinder in the axial direction is inserted, the hole (43) having a smaller diameter than the spindle outer cylinder (16).

4. The gear spindle device for a rolling mill according to any one of claims 1 to 3,
wherein the coolant supply unit (18) is configured to inject the coolant toward the spindle outer cylinder (16) from a position above the spindle outer cylinder (16).

5. The gear spindle device for a rolling mill according to claim 1,
wherein, when the spindle outer cylinder (16) is seen in a horizontal direction which is orthogonal to a center axis of the spindle outer cylinder (16), an angular degree (α) formed between a center axis of the nozzle (19) and the center axis of the spindle outer cylinder (16) is not smaller than 30 degrees and not greater than 60 degrees.

6. The gear spindle device for a rolling mill according to claim 1 or 5,
wherein, when the spindle outer cylinder (16) is seen in the axial direction, an angular degree (β) formed between a center axis of the nozzle (19) and a horizontal direction is not smaller than 30 degrees and not greater than 60 degrees.

7. The gear spindle device for a rolling mill according to any one of claims 1 to 6, comprising:
a temperature sensor (52) configured to measure a temperature of the spindle outer cylinder (16) in the formation region of the engagement portion (22).

8. The gear spindle device for a rolling mill according to claim 7,
wherein the temperature sensor (52) is disposed at a position offset from the coolant supply unit (18) in a direction from a second end side (16b) toward the first end side (16a) of the spindle outer cylinder (16) in the axial direction.

9. The gear spindle device for a rolling mill according to claim 7 or 8, comprising:
a housing (20) which houses the engagement portion (22) and the coolant supply unit (18),
wherein the housing (20) includes a second wall portion (46) having an opening portion (47),
wherein the housing (20) has a lid portion (50) capable of opening and closing the opening portion (47), and
wherein the temperature sensor (52) is supported on the lid portion (50).

10. The gear spindle device for a rolling mill according to claim 9, comprising:
an arm (66, 68) for connecting the lid portion (50) and the second wall portion (46); and
a hinge (67, 69, 71) for supporting the arm (66, 68) on the lid portion (50) or the second wall portion (46) rotatably.

11. A rolling mill facility, comprising:
a mill roll (6);
a motor (2) for driving the mill roll (6); and
the gear spindle device (10) according to any one of claims 1 to 10 configured to transmit a rotational driving force generated by the motor (2) to the mill roll (6).

12. The rolling mill facility according to claim 11, comprising:
a coolant circulation device (80) for circulating the coolant supplied to the spindle outer cylinder (16) and the coolant supplied to the mill roll (6),
wherein the coolant circulation device (80) includes:
a coolant receiving portion (94) for receiving and collecting the coolant supplied to the spindle outer cylinder (16) and the coolant supplied to the mill roll (6);
a first supply line (90) for supplying the coolant from the coolant receiving portion (94) to the coolant supply unit (18); and
a second supply line (88) for supplying the coolant from the coolant receiving portion (94) to the mill roll (6).

13. A method for cooling a gear spindle device for a rolling mill comprising:
a spindle outer cylinder (16) having, at a first end side (16a), an inner circumferential surface (28) provided with an inner circumferential gear (30);
a spindle inner cylinder (14) having an outer circumferential surface (24) provided with an outer circumferential gear (26) which engages with the inner circumferential gear (30); and
a seal member (34) disposed between the spindle outer cylinder (16) and the spindle inner cylinder (14), for holding a lubricant oil at an engagement portion (22) between the inner circumferential gear (30) and the outer circumferential gear (26),
the method comprising:
a step of supplying a coolant toward the spindle outer cylinder (16) in a formation region of the engagement portion (22) where the engagement portion (22) is formed, from a position at an opposite side to the seal member (34) across the engagement portion (22) in an axial direction of the spindle outer cylinder (16), wherein a coolant supply unit (18) is used which includes a nozzle (19) configured to inject the coolant toward the spindle outer cylinder (16) in the formation region of the engagement portion (22), wherein the nozzle (19) is configured to inject the coolant in a direction from a second end side (16b) toward the first end side (16a) of the spindle outer cylinder (16) in the axial direction, and the spindle outer cylinder (16) is configured for coupling a gear box, a motor, or a mill roll of the rolling mill to its second end side (16b).

14. A method for cooling a gear spindle device for a rolling mill comprising:
a spindle outer cylinder (16) having, at a first end side (16a), an inner circumferential surface (28) provided with an inner circumferential gear (30);
a spindle inner cylinder (14) having an outer circumferential surface (24) provided with an outer circumferential gear (26) which engages with the inner circumferential gear (30); and
a seal member (34) disposed between the spindle outer cylinder (16) and the spindle inner cylinder (14), for holding a lubricant oil at an engagement portion (22) between the inner circumferential gear (30) and the outer circumferential gear (26),
the method comprising:
a step of supplying a coolant toward the spindle outer cylinder (16) in a formation region of the engagement portion (22) where the engagement portion (22) is formed, from a position at an opposite side to the seal member (34) across the engagement portion (22) in an axial direction of the spindle outer cylinder (16), wherein a coolant supply unit (18) is used and the gear spindle device comprises a housing (20) which houses the coolant supply unit (18) and the spindle outer cylinder (16) in the formation region of the engagement portion (22).

## Patentansprüche

1. Getriebespindelvorrichtung für ein Walzwerk, umfassend:
einen Spindelaußenzylinder (16), der an einer ersten Endseite (16a) eine Innenumfangsfläche (28) aufweist, die mit einer Innenumfangsverzahnung (30) versehen ist;
einen Spindelinnenzylinder (14) mit einer Außenumfangsfläche (24), die mit einer Außenumfangsverzahnung (26) versehen ist, die mit der Innenumfangsverzahnung (30) in Eingriff steht;
ein Dichtungselement (34), das zwischen dem Spindelaußenzylinder (16) und dem Spindelinnenzylinder (14) angeordnet ist, um ein Schmiermittelöl an einem Eingriffsabschnitt (22) zwischen der Innenumfangsverzahnung (30) und der Außenumfangsverzahnung (26) zu halten; und
eine Kühlmittelzuführeinheit (18) zum Zuführen eines Kühlmittels zum Spindelaußenzylinder (16),
**dadurch gekennzeichnet, dass**
die Kühlmittelzuführeinheit (18) an einer dem Dichtungselement (34) über den Eingriffsabschnitt (22) in axialer Richtung des Spindelaußenzylinders (16) gegenüberliegenden Seite angeordnet ist, um das Kühlmittel in Richtung des Spindelaußenzylinders (16) in einem Bildungsbereich des Eingriffsabschnitts (22) zuzuführen, wo der Eingriffsabschnitt (22) ausgebildet ist, und
die Kühlmittelzuführeinheit (18) eine Düse (19) enthält, die zum Spritzen des Kühlmittels in Richtung des Spindelaußenzylinders (16) in dem Bildungsbereich des Eingriffsabschnitts (22) konfiguriert ist, wobei die Düse (19) konfiguriert ist, das Kühlmittel in der axialen Richtung in Richtung von einer zweiten Endseite (16b) zur ersten Endseite (16a) des Spindelaußenzylinders (16) einzuspritzen, und der Spindelaußenzylinder (16) zum Koppeln eines Getriebes, eines Motors oder einer Walzwerkswalze des Walzwerks mit seiner zweiten Endseite (16b) konfiguriert ist.

2. Getriebespindelvorrichtung für ein Walzwerk, umfassend:
einen Spindelaußenzylinder (16), der an einer ersten Endseite (16a) eine Innenumfangsfläche (28) aufweist, die mit einer Innenumfangsverzahnung (30) versehen ist;
einen Spindelinnenzylinder (14) mit einer Außenumfangsfläche (24), die mit einer Außenumfangsverzahnung (26) versehen ist, die mit der Innenumfangsverzahnung (30) in Eingriff steht;
ein Dichtungselement (34), das zwischen dem Spindelaußenzylinder (16) und dem Spindelinnenzylinder (14) angeordnet ist, um ein Schmiermittelöl an einem Eingriffsabschnitt (22) zwischen der Innenumfangsverzahnung (30) und der Außenumfangsverzahnung (26) zu halten; und
eine Kühlmittelzuführeinheit (18) zum Zuführen eines Kühlmittels zum Spindelaußenzylinder (16),
**dadurch gekennzeichnet, dass**
die Kühlmittelzuführeinheit (18) an einer dem Dichtungselement (34) über den Eingriffsabschnitt (22) in axialer Richtung des Spindelaußenzylinders (16) gegenüberliegenden Seite angeordnet ist, um das Kühlmittel in Richtung des Spindelaußenzylinders (16) in einem Bildungsbereich des Eingriffsabschnitts (22) zuzuführen, wo der Eingriffsabschnitt (22) ausgebildet ist, und
die Getriebespindelvorrichtung ein Gehäuse (20) aufweist, das die Kühlmittelzuführeinheit (18) und den Spindelaußenzylinder (16) im Bildungsbereich des Eingriffsabschnitts (22) aufnimmt.

3. Getriebespindelvorrichtung für ein Walzwerk nach Anspruch 2,
wobei das Gehäuse (20) einen ersten Wandabschnitt (42) mit einem Loch (43) aufweist, in das eine Welle (5) eingesetzt ist, die an einer zweiten Endseite (16b) des Spindelaußenzylinders in der axialen Richtung mit dem Spindelaußenzylinder (16) passt, wobei das Loch (43) einen kleineren Durchmesser als der Spindelaußenzylinder (16) aufweist.

4. Getriebespindelvorrichtung für ein Walzwerk nach einem der Ansprüche 1 bis 3,
wobei die Kühlmittelzuführeinheit (18) so konfiguriert ist, dass sie das Kühlmittel von einer Position oberhalb des Spindelaußenzylinders (16) in Richtung des Spindelaußenzylinders (16) einspritzt.

5. Getriebespindelvorrichtung für ein Walzwerk nach Anspruch 1,
wobei, wenn der Spindelaußenzylinder (16) in horizontaler Richtung gesehen wird, die orthogonal zu einer Mittelachse des Spindelaußenzylinders (16) ist, ein Winkelgrad (α), der zwischen einer Mittelachse der Düse (19) und der Mittelachse des Spindelaußenzylinders (16) ausgebildet ist, nicht kleiner als 30 Grad und nicht größer als 60 Grad ist.

6. Getriebespindelvorrichtung für ein Walzwerk nach Anspruch 1 oder 5,
wobei, wenn der Spindelaußenzylinder (16) in der axialen Richtung gesehen wird, ein Winkelgrad (β), der zwischen einer Mittelachse der Düse (19) und einer horizontalen Richtung ausgebildet ist, nicht kleiner als 30 Grad und nicht größer als 60 Grad ist.

7. Getriebespindelvorrichtung für ein Walzwerk nach einem der Ansprüche 1 bis 6, umfassend:
einen Temperatursensor (52), der so konfiguriert ist, dass er eine Temperatur des Spindelaußenzylinders (16) in dem Bildungsbereich des Eingriffsabschnitts (22) misst.

8. Getriebespindelvorrichtung für ein Walzwerk nach Anspruch 7,
wobei der Temperatursensor (52) an einer Position angeordnet ist, die von der Kühlmittelzuführeinheit (18) in der axialen Richtung in einer Richtung von einer zweiten Endseite (16b) zu der ersten Endseite (16a) des Spindelaußenzylinders (16) versetzt ist.

9. Getriebespindelvorrichtung für ein Walzwerk nach Anspruch 7 oder 8, umfassend:
ein Gehäuse (20), das den Eingriffsabschnitt (22) und die Kühlmittelzuführeinheit (18) aufnimmt,
wobei das Gehäuse (20) einen zweiten Wandabschnitt (46) mit einem Öffnungsabschnitt (47) aufweist,
wobei das Gehäuse (20) einen Deckelabschnitt (50) aufweist, der den Öffnungsabschnitt (47) öffnen und schließen kann, und
wobei der Temperatursensor (52) auf dem Deckelabschnitt (50) getragen ist.

10. Getriebespindelvorrichtung für ein Walzwerk nach Anspruch 9, umfassend:
einen Arm (66, 68) zum Verbinden des Deckelabschnitts (50) und des zweiten Wandabschnitts (46); und
ein Scharnier (67, 69, 71) zum drehbaren Tragen des Arms (66, 68) auf dem Deckelabschnitt (50) oder dem zweiten Wandabschnitt (46).

11. Walzwerkanlage, umfassend:
eine Walzwerkswalze (6);
einen Motor (2) für den Antrieb der Walze (6); und
die Getriebespindelvorrichtung (10) nach einem der Ansprüche 1 bis 10, die so konfiguriert ist, dass sie eine vom Motor (2) erzeugte Rotationsantriebskraft auf die Walze (6) überträgt.

12. Walzwerkanlage nach Anspruch 11, umfassend:
eine Kühlmittelumwälzvorrichtung (80) zum Umwälzen des dem Spindelaußenzylinder (16) zugeführten Kühlmittels und des der Walze (6) zugeführten Kühlmittels,
wobei die Kühlmittelumwälzvorrichtung (80) umfasst:
einen Kühlmittelaufnahmeabschnitt (94) zum Aufnehmen und Sammeln des dem Spindelaußenzylinder (16) zugeführten Kühlmittels und des der Walze (6) zugeführten Kühlmittels;
eine erste Zuführleitung (90) zum Zuführen des Kühlmittels von dem Kühlmittelaufnahmeabschnitt (94) zu der Kühlmittelzuführeinheit (18); und
eine zweite Zuführleitung (88) zum Zuführen des Kühlmittels von dem Kühlmittelaufnahmeabschnitt (94) zur Walzwerkswalze (6).

13. Verfahren zur Kühlung einer Getriebespindelvorrichtung für ein Walzwerk, umfassend:
einen Spindelaußenzylinder (16), der an einer ersten Endseite (16a) eine Innenumfangsfläche (28) aufweist, die mit einer Innenumfangsverzahnung (30) versehen ist;
einen Spindelinnenzylinder (14) mit einer Außenumfangsfläche (24), die mit einer Außenumfangsverzahnung (26) versehen ist, die mit der Innenumfangsverzahnung (30) in Eingriff steht; und
ein Dichtungselement (34), das zwischen dem Spindelaußenzylinder (16) und dem Spindelinnenzylinder (14) angeordnet ist, um ein Schmiermittelöl an einem Eingriffsabschnitt (22) zwischen der Innenumfangsverzahnung (30) und der Außenumfangsverzahnung (26) zu halten,
wobei das Verfahren umfasst:
einen Schritt des Zuführens eines Kühlmittels in Richtung des Spindelaußenzylinders (16) in einem Bildungsbereich des Eingriffsabschnitts (22), wo der Eingriffsabschnitt (22) ausgebildet ist, von einer Position an einer dem Dichtungselement (34) über den Eingriffsabschnitt (22) in axialer Richtung des Spindelaußenzylinders (16) gegenüberliegenden Seite, wobei eine Kühlmittelzuführeinheit (18) verwendet wird, die eine Düse (19) enthält, die zum Spritzen des Kühlmittels in Richtung des Spindelaußenzylinders (16) in dem Bildungsbereich des Eingriffsabschnitts (22) konfiguriert ist, wobei die Düse (19) konfiguriert ist, das Kühlmittel in der axialen Richtung in Richtung von einer zweiten Endseite (16b) zu der ersten Endseite (16a) des Spindelaußenzylinders (16) einzuspritzen, und der Spindelaußenzylinder (16) zum Koppeln eines Getriebes, eines Motors oder einer Walzwerkswalze des Walzwerks mit seiner zweiten Endseite (16b) konfiguriert ist.

14. Verfahren zur Kühlung einer Getriebespindelvorrichtung für ein Walzwerk, umfassend:
einen Spindelaußenzylinder (16), der an einer ersten Endseite (16a) eine Innenumfangsfläche (28) aufweist, die mit einer Innenumfangsverzahnung (30) versehen ist;
einen Spindelinnenzylinder (14) mit einer Außenumfangsfläche (24), die mit einer Außenumfangsverzahnung (26) versehen ist, die mit der Innenumfangsverzahnung (30) in Eingriff steht; und
ein Dichtungselement (34), das zwischen dem Spindelaußenzylinder (16) und dem Spindelinnenzylinder (14) angeordnet ist, um ein Schmiermittelöl an einem Eingriffsabschnitt (22) zwischen der Innenumfangsverzahnung (30) und der Außenumfangsverzahnung (26) zu halten,
wobei das Verfahren umfasst:
einen Schritt des Zuführens eines Kühlmittels in Richtung des Spindelaußenzylinders (16) in einem Bildungsbereich des Eingriffsabschnitts (22), wo der Eingriffsabschnitt (22) ausgebildet ist, von einer Position an einer dem Dichtungselement (34) über den Eingriffsabschnitt (22) in axialer Richtung des Spindelaußenzylinders (16) gegenüberliegenden Seite, wobei eine Kühlmittelzuführeinheit (18) verwendet wird und die Getriebespindelvorrichtung ein Gehäuse (20) umfasst, das die Kühlmittelzuführeinheit (18) und den Spindelaußenzylinder (16) in dem Bildungsbereich des Eingriffsabschnitts (22) aufnimmt.

## Revendications

1. Dispositif de broche d'engrenage pour un laminoir, comprenant :
un cylindre extérieur (16) de broche ayant, sur un premier côté d'extrémité (16a), une surface circonférentielle intérieure (28) prévue avec une roue dentée circonférentielle intérieure (30) ;
un cylindre intérieur (14) de broche ayant une surface circonférentielle extérieure (24) prévue avec une roue dentée circonférentielle extérieure (26) qui s'engage avec la roue dentée circonférentielle intérieure (30) ;
un élément d'étanchéité (34) disposé entre le cylindre extérieur (16) de broche et le cylindre intérieur (14) de broche, pour contenir une huile de lubrification au niveau d'une partie (22) d'engagement entre la roue dentée circonférentielle intérieure (30) et la roue dentée circonférentielle extérieure (26) ; et
une unité (18) d'alimentation de réfrigérant pour alimenter un réfrigérant vers le cylindre extérieur (16) de broche,
**caractérisé en ce que**
l'unité (18) d'alimentation de réfrigérant est disposée sur un côté opposé à l'élément d'étanchéité (34) transversalement à la partie (22) d'engagement dans un sens axial du cylindre extérieur (16) de broche, pour alimenter le réfrigérant vers le cylindre extérieur (16) de broche dans une région de formation de la partie (22) d'engagement où la partie (22) d'engagement est formée, et
l'unité (18) d'alimentation de réfrigérant inclut une buse (19) configurée pour injecter le réfrigérant vers le cylindre extérieur (16) de broche dans la région de formation de la partie (22) d'engagement, dans lequel la buse (19) est configurée pour injecter le réfrigérant dans un sens depuis un deuxième côté d'extrémité (16b) vers le premier côté d'extrémité (16a) du cylindre extérieur (16) de broche dans le sens axial, et le cylindre extérieur (16) de broche est configuré pour coupler une boîte d'engrenage, un moteur, ou un cylindre de laminoir du laminoir à son deuxième côté d'extrémité (16b).

2. Dispositif de broche d'engrenage pour un laminoir, comprenant :
un cylindre extérieur (16) de broche ayant, sur un premier côté d'extrémité (16a), une surface circonférentielle intérieure (28) prévue avec une roue dentée circonférentielle intérieure (30) ;
un cylindre intérieur (14) de broche ayant une surface circonférentielle extérieure (24) prévue avec une roue dentée circonférentielle extérieure (26) qui s'engage avec la roue dentée circonférentielle intérieure (30) ;
un élément d'étanchéité (34) disposé entre le cylindre extérieur (16) de broche et le cylindre intérieur (14) de broche, pour contenir une huile de lubrification au niveau d'une partie (22) d'engagement entre la roue dentée circonférentielle intérieure (30) et la roue dentée circonférentielle extérieure (26) ; et
une unité (18) d'alimentation de réfrigérant pour alimenter un réfrigérant vers le cylindre extérieur (16) de broche,
**caractérisé en ce que**
l'unité (18) d'alimentation de réfrigérant est disposée sur un côté opposé à l'élément d'étanchéité (34) transversalement à la partie (22) d'engagement dans un sens axial du cylindre extérieur (16) de broche, pour alimenter le réfrigérant vers le cylindre extérieur (16) de broche dans une région de formation de la partie (22) d'engagement où la partie (22) d'engagement est formée, et
le dispositif de broche d'engrenage comprend un logement (20) qui loge l'unité (18) d'alimentation de réfrigérant et le cylindre extérieur (16) de broche dans la région de formation de la partie (22) d'engagement.

3. Dispositif de broche d'engrenage pour un laminoir selon la revendication 2,
dans lequel le logement (20) inclut une première partie (42) de paroi ayant un trou (43) dans lequel un arbre (5) s'ajustant avec le cylindre extérieur (16) de broche au niveau d'un deuxième côté d'extrémité (16b) du cylindre extérieur de broche dans le sens axial est inséré, le trou (43) ayant un diamètre plus petit que le cylindre extérieur (16) de broche.

4. Dispositif de broche d'engrenage pour un laminoir selon l'une quelconque des revendications 1 à 3,
dans lequel l'unité (18) d'alimentation de réfrigérant est configurée pour injecter le réfrigérant vers le cylindre extérieur (16) de broche depuis une position au-dessus du cylindre extérieur (16) de broche.

5. Dispositif de broche d'engrenage pour un laminoir selon la revendication 1,
dans lequel, lorsque le cylindre extérieur (16) de broche est vu dans un sens horizontal qui est orthogonal à un axe central du cylindre extérieur (16) de broche, un degré angulaire (α) formé entre un axe central de la buse (19) et l'axe central du cylindre extérieur (16) de broche n'est pas plus petit que 30 degrés et pas plus grand que 60 degrés.

6. Dispositif de broche d'engrenage pour un laminoir selon la revendication 1 ou 5,
dans lequel, lorsque le cylindre extérieur (16) de broche est vu dans le sens axial, un degré angulaire (β) formé entre un axe central de la buse (19) et un sens horizontal n'est pas plus petit que 30 degrés et pas plus grand que 60 degrés.

7. Dispositif de broche d'engrenage pour un laminoir selon l'une quelconque des revendications 1 à 6, comprenant :
un capteur (52) de température configuré pour mesurer une température du cylindre extérieur (16) de broche dans la région de formation de la partie (22) d'engagement.

8. Dispositif de broche d'engrenage pour un laminoir selon la revendication 7,
dans lequel le capteur (52) de température est disposé en une position décalée par rapport à l'unité (18) d'alimentation de réfrigérant dans un sens du deuxième côté d'extrémité (16b) vers le premier côté d'extrémité (16a) du cylindre extérieur (16) de broche dans le sens axial.

9. Dispositif de broche d'engrenage pour un laminoir selon la revendication 7 ou 8, comprenant :
un logement (20) qui loge la partie (22) d'engagement et l'unité (18) d'alimentation de réfrigérant,
dans lequel le logement (20) inclut une deuxième partie (46) de paroi ayant une partie (47) d'ouverture,
dans lequel le logement (20) a une partie (50) de couvercle apte à ouvrir et fermer la partie (47) d'ouverture, et
dans lequel le capteur (52) de température est supporté sur la partie (50) de couvercle.

10. Dispositif de broche d'engrenage pour un laminoir selon la revendication 9, comprenant :
un bras (66, 68) pour connecter la partie (50) de couvercle et la deuxième partie (46) de paroi ; et
une charnière (67, 69, 71) pour supporter le bras (66, 68) sur la partie (50) de couvercle ou la deuxième partie (46) de paroi de façon rotative.

11. Installation de laminage, comprenant :
un cylindre (6) de laminoir ;
un moteur (2) pour entraîner le cylindre (6) de laminoir ; et
le dispositif (10) de broche d'engrenage selon l'une quelconque des revendications 1 à 10 configuré pour transmettre une force d'entraînement en rotation générée par le moteur (2) au cylindre (6) de laminoir.

12. Installation de laminage selon la revendication 11, comprenant :
un dispositif (80) de circulation de réfrigérant pour faire circuler le réfrigérant alimenté jusqu'au cylindre extérieur (16) de broche et le réfrigérant alimenté jusqu'au cylindre (6) de laminoir,
dans lequel le dispositif (80) de circulation de réfrigérant inclut :
une partie (94) de réception de réfrigérant pour recevoir et recueillir le réfrigérant alimenté jusqu'au cylindre extérieur (16) de broche et le réfrigérant alimenté jusqu'au cylindre (6) de laminoir ;
une première ligne (90) d'alimentation pour alimenter le réfrigérant depuis la partie (94) de réception de réfrigérant jusqu'à l'unité (18) d'alimentation de réfrigérant ; et
une deuxième ligne (88) d'alimentation pour alimenter le réfrigérant depuis la partie (94) de réception de réfrigérant jusqu'au cylindre (6) de laminoir.

13. Procédé de refroidissement d'un dispositif de broche d'engrenage pour un laminoir comprenant :
un cylindre extérieur (16) de broche ayant, sur un premier côté d'extrémité (16a), une surface circonférentielle intérieure (28) prévue avec une roue dentée circonférentielle intérieure (30) ;
un cylindre intérieur (14) de broche ayant une surface circonférentielle extérieure (24) prévue avec une roue dentée circonférentielle extérieure (26) qui s'engage avec la roue dentée circonférentielle intérieure (30) ; et
un élément d'étanchéité (34) disposé entre le cylindre extérieur (16) de broche et le cylindre intérieur (14) de broche, pour contenir une huile de lubrification au niveau d'une partie (22) d'engagement entre la roue dentée circonférentielle intérieure (30) et la roue dentée circonférentielle extérieure (26),
le procédé comprenant :
une étape d'alimentation d'un réfrigérant vers le cylindre extérieur (16) de broche dans une région de formation de la partie (22) d'engagement où la partie (22) d'engagement est formée, depuis une position au niveau d'un côté opposé à l'élément d'étanchéité (34) transversalement à la partie (22) d'engagement dans un sens axial du cylindre extérieur (16) de broche, dans lequel une unité (18) d'alimentation de réfrigérant est utilisée qui inclut une buse (19) configurée pour injecter le réfrigérant vers le cylindre extérieur (16) de broche dans la région de formation de la partie (22) d'engagement, dans lequel la buse (19) est configurée pour injecter le réfrigérant dans un sens depuis un deuxième côté d'extrémité (16b) vers le premier côté d'extrémité (16a) du cylindre extérieur (16) de broche dans le sens axial, et le cylindre extérieur (16) de broche est configuré pour coupler une boîte d'engrenage, un moteur, ou un cylindre de laminoir du laminoir à son deuxième côté d'extrémité (16b).

14. Procédé de refroidissement d'un dispositif de broche d'engrenage pour un laminoir comprenant :
un cylindre extérieur (16) de broche ayant, sur un premier côté d'extrémité (16a), une surface circonférentielle intérieure (28) prévue avec une roue dentée circonférentielle intérieure (30) ;
un cylindre intérieur (14) de broche ayant une surface circonférentielle extérieure (24) prévue avec une roue dentée circonférentielle extérieure (26) qui s'engage avec la roue dentée circonférentielle intérieure (30) ; et
un élément d'étanchéité (34) disposé entre le cylindre extérieur (16) de broche et le cylindre intérieur (14) de broche, pour contenir une huile de lubrification au niveau d'une partie (22) d'engagement entre la roue dentée circonférentielle intérieure (30) et la roue dentée circonférentielle extérieure (26),
le procédé comprenant :
une étape d'alimentation d'un réfrigérant vers le cylindre extérieur (16) de broche dans une région de formation de la partie (22) d'engagement où la partie (22) d'engagement est formée, depuis une position au niveau d'un côté opposé à l'élément d'étanchéité (34) transversalement à la partie (22) d'engagement dans un sens axial du cylindre extérieur (16) de broche, dans lequel une unité (18) d'alimentation de réfrigérant est utilisée et le dispositif de broche d'engrenage comprend un logement (20) qui loge l'unité (18) d'alimentation de réfrigérant et le cylindre extérieur (16) de broche dans la région de formation de la partie (22) d'engagement.
